Europäisches Patentamt

European Patent Office

Office européen des brevets

(11) Veröffentlichungsnummer: **0 427 145 A1**

## (12) EUROPÄISCHE PATENTANMELDUNG

(21) Anmeldenummer: 90121053.4

(22) Anmeldetag: 02.11.90

(51) Int. Cl.5: **F04D 13/06**, F04D 3/02, F04D 25/06, H02K 7/14, H02K 7/12

(30) Priorität: 09.11.89 DE 3937345

(43) Veröffentlichungstag der Anmeldung:
15.05.91 Patentblatt 91/20

(84) Benannte Vertragsstaaten:
AT BE CH DE FR GB IT LI NL SE

(71) Anmelder: **Arthur Pfeiffer Vakuumtechnik Wetzlar GmbH**
**Emmeliusstrasse 33**
**W-6334 Asslar(DE)**

(72) Erfinder: **Blecker, Armin**
**Talstrasse 5**
**W-6334 Asslar/Werdorf(DE)**
Erfinder: **Ochs, Helmut**
**Schützenstrasse 22**
**W-6293 Löhnberg(DE)**
Erfinder: **Lotz, Heinrich**
**Helgebachstrasse 47**
**W-6330 Wetzlar(DE)**
Erfinder: **Reuschling, Horst**
**Zum Weiher 13**
**W-6300 Giessen-Kl.-Linden(DE)**

(54) **Pumpe mit Antriebsmotor.**

(57) Die Erfindung beschreibt eine Pumpe mit Antriebsmotor zum Fördern von Flüssigkeiten und Gasen. Auf dem Rotor 2 des Antriebsmotors sind schraubenförmige Förderrillen 3 angebracht, so daß dieser gleichzeitig als Rotor für die Pumpe dient.

EP 0 427 145 A1

## PUMPE MIT ANTRIEBSMOTOR

Die Erfindung betrifft eine Pumpe mit Antriebsmotor zum Fördern von Flüssigkeiten und Gasen. Die Pumpe selbst ist in Form von schraubenförmigen Rillen auf der Welle ihres Antriebsmotors integriert. Ein hauptsächliches Anwendungsgebiet einer solchen Pumpe ist die Versorgung von Kugellagern mit Öl.

Bekannte Pumpen zum Fördern von Öl sind so konstruiert, daß auf der verlängerten Welle des Antriebsmotors schraubenförmige Rillen angebracht sind.

Da solche Ölpumpen vielfach als Hilfseinrichtungen an komplexeren Systemen - wie z. B. an einer Vakuumpumpe - eingesetzt werden, wird ihr Raumbedarf und Konstruktionsaufwand oft als zu aufwendig angesehen.

Der Erfindung lag die Aufgabe zugrunde, eine Ölpumpe zu konstruieren, welche einen kompakten Aufbau aufweist und somit einen minimalen Raumbedarf hat. Der Aufwand für die Konstruktion und Fertigung soll in Grenzen gehalten und ein guter Wirkungsgrad sichergestellt werden.

Die Aufgabe wird durch die kennzeichnenden Merkmale des ersten Patentanspruches gelöst. Die Ansprüche zwei und drei stellen spezielle Ausgestaltungen der Erfindung dar.

Die schraubenförmigen Förderrillen, die innerhalb des Motors in dessen Rotor eingearbeitet sind, dürfen die Funktion des Motors nicht wesentlich beeinträchtigen. Dies bedeutet zunächst, daß die Summe der Rillenbreiten im Verhältnis zur Gesamtlänge des Motors in Grenzen gehalten werden muß, damit der magnetische Fluß zwischen Motorstator und Rotor nicht durch einen zu hohen magnetischen Widerstand reduziert wird. Weiterhin muß die Tatsache berücksichtigt werden, daß zwischen den Rillen des Rotors eine Bündelung der magnetischen Feldlinien besteht, wodurch die Magnetfeldstärke an diesen Stellen erhöht wird. Übersteigt die Magnetfeldstärke an diesen Stellen die Sättigung im Rotor, dann ist diese Erhöhung wirkungslos. Im Sinne eines optimalen Wirkungsgrades sollte also das Magnetfeld so weit unter der Sättigung bleiben, daß zwischen den Rillen die durch Bündelung der Feldlinien entstandene partielle Magnetfelderhöhung die Sättigung nicht übersteigt.

Als Kriterium für eine optimale Dimensionierung des vom Stator erzeugten Magnetfeldes gilt folgendes:

Das vom Stator erzeugte Magnetfeld $H_{st}$ soll um den Anteil des gesättigten Magnetfeldes $H_{Sätt}$ niedriger sein, welcher dem Verhältnis der Summe a der Rillenbreiten zur Gesamtlänge 1 des Rotors entspricht. Dies wird in der folgenden Formel ausgedrückt:

$$H_{st} \leq H_{Sätt} (1 - \tfrac{a}{1})$$

Bei Verwendung eines Asynchronmotors muß zusätzlich darauf geachtet werden, daß die schraubenförmigen Förderrillen den stromführenden Leiter in der äußeren Zone des Rotors nicht unterbrechen. Dieser Forderung wird dadurch begegnet, daß die Nuten, in welchen sich die stromführenden Leiter befinden, tiefer als die schraubenförmigen Förderrillen liegen.

Die Erfindung wird an Hand der einzigen Abbildung näher erläutert.

Die Abbildung zeigt einen Querschnitt der erfindungsgemäßen Anordung.

Der Antriebsmotor besteht aus dem Stator 1 und dem Rotor 2. In den Rotor sind schraubenförmige Rillen 3 eingearbeitet, wodurch dieser gleichzeitig die Funktion einer Pumpe erfüllen kann. Eventuell vorhandene stromführende Leiter z. B. bei einem Asynchronmotor befinden sich in Nuten 4, welche unter den schraubenförmigen Förderrillen liegen.

## Ansprüche

1. Pumpe mit Antriebsmotor zum Fördern von Flüssigkeiten und Gasen, dadurch gekennzeichnet, daß die Pumpe selbst im wesentlichen aus einer Welle (2) mit schraubenförmigen Förderrillen (3) besteht und so in ihren Antriebsmotor im gleichen axialen Abschnitt wie der Motorstator (1) integriert ist, daß sie gleichzeitig als Rotor (2) des Motors dient.

2. Pumpe nach Anspruch 1 dadurch gekennzeichnet, daß das Magnetfeld des Motorstators nicht größer wird, als der Teil des gesättigten Magnetfeldes, welcher durch folgende Größe ausgedrückt wird:

$$H_{st} \leq H_{Sätt} (1 - \tfrac{a}{1})$$

wobei a die Summe der Förderrillenbreiten und 1 die Länge des Motors ist.

3. Pumpe nach einem der Ansprüche 1 oder 2 dadurch gekennzeichnet, daß die Nuten (4), in welchen sich die stromführenden Leiter des Rotors (2) befinden, tiefer liegen als die schraubenförmigen Förderrillen (3).

# EUROPÄISCHER
# RECHERCHENBERICHT

Nummer der Anmeldung

## EP 90 12 1053

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | NL-C-1 352 63   (REACTOR CENTRUM NEDERLAND)<br>* das ganze Dokument *<br>– – – | 1,3 | F 04<br>D 13/06<br>F 04 D 3/02 |
| X,A | US-A-2 976 808   (WHITEHURST)<br>* Spalte 2, Zeile 42 - Spalte 3, Zeile 16; Figur 1 *<br>– – – | 1,3 | F 04 D 25/06<br>H 02 K 7/14<br>H 02 K 7/12 |
| X,A | EP-A-0 081 872   (FDO TECHNISCHE ADVISEURS)<br>* Seite 4, Zeile 33 - Seite 5, Zeile 6 * * Seite 5, Zeile 32 - Seite 6, Zeile 13; Figuren 2, 4 *<br>– – – | 1,3 | |
| A | EP-A-0 147 015   (SARGENT-WELCH SCIENTIFIC COMPANY)<br>* Seite 7, Zeilen 7 - 18; Figur 1 *<br>– – – – – | 1 | |

| RECHERCHIERTE SACHGEBIETE (Int. Cl.5) |
|---|
| F 04 D<br>H 02 K |

Der vorliegende Recherchenbericht wurde für alle Patentansprüche erstellt

| Recherchenort | Abschlußdatum der Recherche | Prüfer |
|---|---|---|
| Den Haag | 23 Januar 91 | TEERLING J.H. |